# EUROPEAN PATENT SPECIFICATION

(11) **EP 3 121 117 B1**
(45) Date of publication and mention of the grant of the patent: **22.05.2019**
(21) Application number: 16170850.8
(22) Date of filing: 23.05.2016
(51) Int. Cl.: B64C 29/02, B64C 39/02, B64D 29/02, B64D 31/06, B64C 15/12

(54) **CONTROL SYSTEM AND STRATEGY FOR TAIL SITTER**
STEUERUNGSSYSTEM UND -STRATEGIE FÜR EINEN AUF DEM HECK STEHENDEN SENKRECHTSTARTER
SYSTÈME DE COMMANDE ET STRATÉGIE POUR PERSONNE ASSISE À L'ARRIÈRE

(30) Priority: 23.07.2015 US 201562196010 P
(43) Date of publication of application: 25.01.2017
(73) Proprietor: Sikorsky Aircraft Corporation, Stratford, CT 06615 (US)
(72) Inventor: KUBIK, Stephen, Shelton, CT 06484 (US); DRISCOLL, Joseph T., Prospect, CT 06712 (US); D'ANNA, Frank P., Seymour, CT 06483 (US); ALBER, Mark R., Milford, CT 06461 (US); LAUDER, Timothy F., Oxford, CT 06478 (US); FEGELY, Cody, Milford, CT 06460 (US)
(74) Representative: Schmitt-Nilson Schraud Waibel Wohlfrom Patentanwälte Partnerschaft mbB

(56) References cited:
- US-A- 5 765 783
- US-A1- 2012 248 259
- US-A1- 2013 206 921
- US-A1- 2015 014 475

## Description

The subject matter of this disclosure was made with government support under HR0011-14-C-0010 awarded by DARPA. The government has certain rights to this subject matter.

The subject matter disclosed herein relates to tail sitter aircraft and, more particularly, to a control system and a control strategy for a tail sitter aircraft.

A vertical take-off and landing (VTOL) aircraft is one that can hover, take off and land vertically. This classification includes fixed-wing aircraft as well as helicopters and other aircraft with powered rotors, such as cyclogyros/cyclocopters and tiltrotors. Some VTOL aircraft can operate in other modes as well, such as conventional take-off and landing (CTOL), short take-off and landing (STOL) and/or short take-off and vertical landing (STOVL). Others, such as some helicopters, can only operate by VTOL, due to the aircraft lacking landing gear that can handle horizontal motion.

Traditional configurations of VTOL aircraft have layouts that utilize control surfaces to maintain control during forward flight regimes. These layouts can be complicated, however, in terms of mechanics and control algorithms.

US 5 765 783 A discloses a vertically launchable and recoverable winged aircraft which includes an airframe, a least one proprotor connected to the airframe through a rotatable drive shaft, and collective and cyclic pitch control systems. The proprotors each have an axis of rotation generally parallel to the forward direction of flight in airplane mode, and include at least two proprotor blades. FIG. 7 shows how collective and cyclic pitch control and elevon control are used for thrust, roll, pitch, and yaw control functions in both helicopter and airplane flight modes. For example, cyclic pitch control varies blade pitch around a disc so that pitch is reduced on one side of the disc and increased on the other side of the disc. The aircraft flies toward the side on which the proprotor tilts.

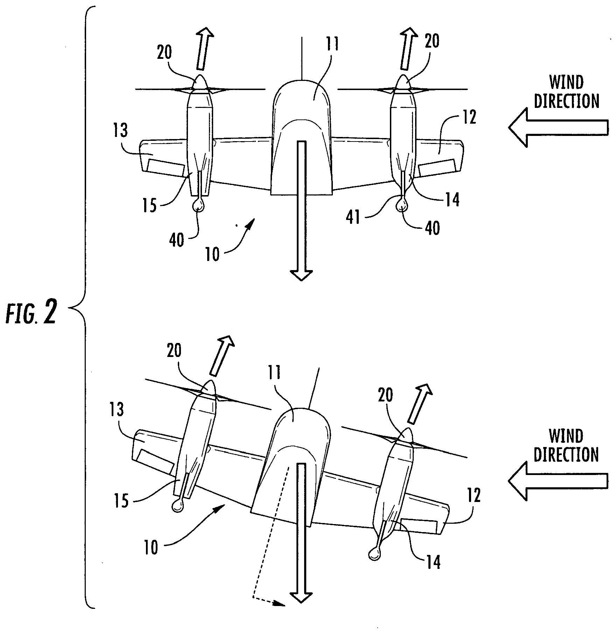

US 2015/014475 A1 discloses a Vertical Takeoff and Landing (VTOL) air vehicle which includes a first port wing and first starboard wing. FIGS. 2A, 2B, and 2C are starboard plan, top and perspective views, respectively, illustrating pitch up, yaw right and roll flight control forces, respectively, of the two-rotor aircraft. In some embodiments the hub and/or rotor blades can be hinged or gimbaled so that as the swash plate (145, 150) moves the rotor will displace at an angle relative to its initial position (or to the air vehicle), associated with the swash plate displacement, resulting in the thrust vector being angled relative to its initial position (e.g., directly forward), where a component of this angled force vector will impart a force on the air vehicle to cause it to rotate (e.g., pitch).

The invention relates to tail sitter aircraft according to the appended claims.

According to one aspect of the disclosure, a tail sitter aircraft is capable of forward flight and hover operations. The tail sitter aircraft includes a wing and first and second prop-nacelles supportively disposed on the wing. Each of the first and second prop-nacelles includes an articulable rotor, which is rotatable about variable rotational axes and which includes blades that are collectively and cyclically controllable in both forward flight and hover regimes.

In accordance with additional or alternative embodiments, the tail sitter aircraft includes fuselage. The wing includes first and second wing elements extending outwardly from opposite sides of the fuselage, and the first and second prop-nacelles are supportively disposed on the first and second wing elements, respectively.

In accordance with additional or alternative embodiments, the blades for each articulable rotor are coupled to a hub by way of a single, non-lead/lag pitch horn.

The tail sitter aircraft includes a flight computer configured to execute controlled articulations of each articulable rotor and to execute collective and cyclic control of the blades.

In accordance with additional or alternative embodiments, the flight computer executes the controlled articulations of each articulable rotor and the collective and cyclic control of the blades during both of the forward flight and hover regimes.

In accordance with additional or alternative embodiments, rotation about a Y axis is achieved by application of same-sign cyclic commands to each articulable rotor, rotation about an X axis is achieved by application of opposite-sign cyclic commands to each articulable rotor, rotation about a Z axis is achieved by application of opposite-sign collective commands to each articulable rotor, thrusting is achieved by application of same-sign collective commands to each articulable rotor, and side-slipping is achieved by applications of same-sign articulation commands and same-sign cyclic commands to each articulable rotor.

In accordance with additional or alternative embodiments, the rotation about the Y axis results in a nose up/down movement during the forward flight regime and a toppling movement during the hover regime.

In accordance with additional or alternative embodiments, the rotation about the X axis results in a banking movement during the forward flight regime and yaw movement during the hover regime.

In accordance with additional or alternative embodiments, the rotation about the Z axis results in a yawing movement during the forward flight regime and a teetering movement during the hover regime.

In accordance with additional or alternative embodiments, the thrusting results in increased or decreased torque at each articulable rotor.

In accordance with additional or alternative embodiments, the side-slipping results in a sideways movement during the forward flight and hover regimes.

According to yet another aspect of the disclosure, a tail sitter aircraft capable of forward flight and hover operations is provided and includes a wing, first and second prop-nacelles supportively disposed on the wing, each of the first and second prop-nacelles including an articulable rotor, which is rotatable about variable rotational axes and which comprises blades that are collectively and cyclically controllable in both forward flight and hover regimes and a flight computer configured to execute a control strategy in both the forward flight and hover regimes by controlled articulations of each rotor and by collective and cyclic control of the blades.

In accordance with additional or alternative embodiments, the tail sitter aircraft further includes a fuselage. The wing includes first and second wing elements extending outwardly from opposite sides of the fuselage, and the first and second prop-nacelles are supportively disposed on the first and second wing elements, respectively.

In accordance with additional or alternative embodiments, the blades for each articulable rotor are coupled to a hub by way of a single, non-lead/lag pitch horn.

In accordance with additional or alternative embodiments, the control strategy includes rotation about a Y axis achieved by application of same-sign cyclic commands to each articulable rotor, the pitching resulting in a nose up/down movement during the forward flight regime and a toppling movement during the hover regime, rotation about an X axis achieved by application of opposite-sign cyclic commands to each articulable rotor, the rolling resulting in a banking movement during the forward flight regime and a spin-like-a-top movement during the hover regime, rotation about a Z axis achieved by application of opposite-sign collective commands to each articulable rotor, the yawing resulting in a yawing movement during the forward flight regime and teetering movement during the hover regime, thrusting achieved by application of same-sign collective commands to each articulable rotor and side-slipping achieved by applications of same-sign articulation commands and same-sign cyclic commands to each articulable rotor.

These and other advantages and features will become more apparent from the following description taken in conjunction with the drawings.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic illustration of roll, pitch and yaw in hover and forward flight regimes for a tail sitter aircraft in accordance with embodiments;
FIG. 2 is a schematic illustration of a side-slipping movement of the tail sitter aircraft of FIG. 1;
FIG. 3 is a perspective view of a portion of a rotor of the tail sitter aircraft of FIGS. 1 and 2;
FIG. 4 is a schematic illustration of a flight computer of the tail sitter aircraft of FIGS. 1 and 2; and
FIG. 5 is a front view illustrating a control strategy for the tail sitter aircraft of FIGS. 1 and 2.
The detailed description explains embodiments of the disclosure, together with advantages and features, by way of example with reference to the drawings.

As will be described below, a tail sitter aircraft is provided and is capable of rotor-only control throughout the flight regime. This includes the vertical take-off and landing (VOTL) or hover regime, the forward flight regime and the transition regime between the hover and forward flight regimes. The tail sitter aircraft can thus perform as a rotorcraft and a fixed wing aircraft.

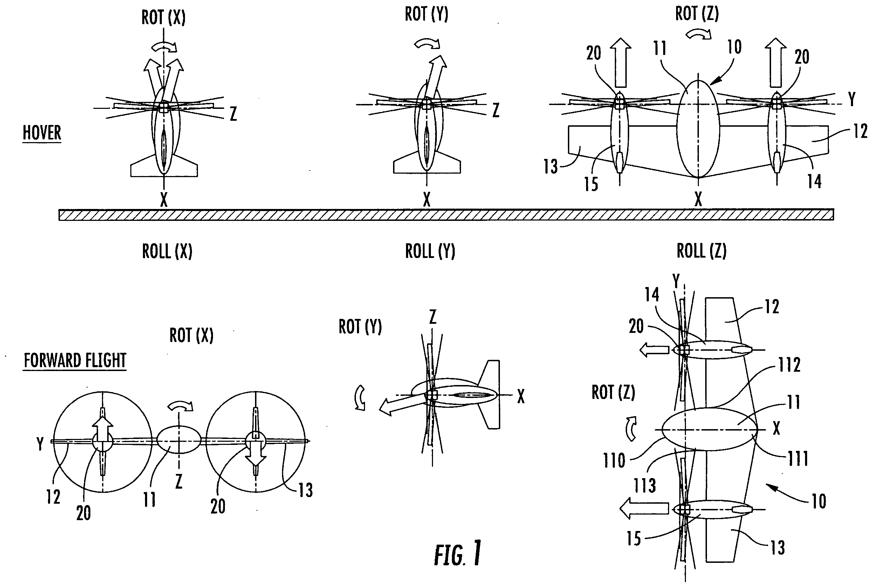

With reference to FIGS. 1 and 2, a tail sitter aircraft 10 is provided and is capable of forward flight or cruise operations and hover or vertical take-off and landing (VTOL) operations. In accordance with some embodiments, the tail sitter aircraft 10 may include a fuselage 11 having a nose cone section 110, a trailing section 111, a first side 112 and a second side 113 opposite the first side. The tail sitter aircraft 10 further includes a first wing element 12 extending outwardly from the first side 112 in a potentially fixed wing configuration, a second wing element 13 extending outwardly from the second side 113 in a potentially fixed wing configuration, a first prop-nacelle 14 supportively disposed on the first wing element 12 and a second prop-nacelle 15 supportively disposed on the second wing element 13.

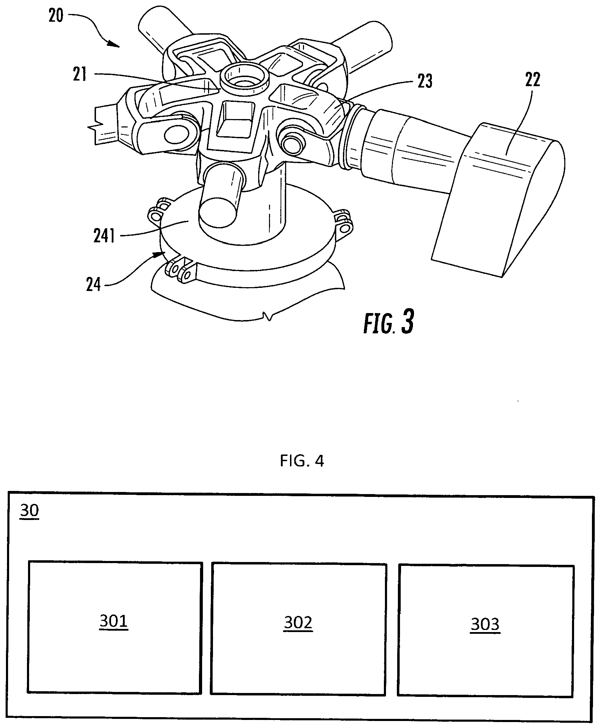

With reference to FIG. 3, each of the first and second prop-nacelles 14 and 15 includes an articulable rotor 20. The articulable rotor 20 for each of the first and second prop-nacelles 14 and 15 is rotatable about variable rotational axes RA and includes a hub element 21, blades 22 and a single, non-lead/lag pitch horn 23. The blades 22 are each coupled to the hub element 21 by way of the pitch horn 23 and extend outwardly from the hub element 21. The blades 22 are collectively and cyclically controllable in both forward flight and hover regimes by way of swashplate assembly 24. Though not entirely shown in FIG. 3, the swashplate assembly 24 may include a swashplate 241, which is rotatable about a rotor shaft, a plurality of servos that control a tilting of the swashplate 241 relative to the rotor shaft and a plurality of pitch change rods (PCRs). The PCRs are respectively coupled at opposite ends thereof to the swashplate 241 and to the pitch horn 23 of each blade 22 and thereby transmit the tilting action of the swashplate 241 to the corresponding blade 22 to cause that corresponding blade to pitch collectively or cyclically.

With reference to FIG. 4, the tail sitter aircraft 10 further includes a flight computer 30 that may be housed in the fuselage 11, either or both of the first and second wing elements 12 and 13 and/or either or both of the first and second prop-nacelles 14 and 15. In any case, the flight computer 30 is configured to execute a control strategy in both the forward flight and hover regimes by way of controlled articulations of each articulable rotor 20 and by collective and cyclic control of the blades 22 of each articulable rotor 20. As shown in FIG. 4, the flight computer 30 includes a processing unit 301, a memory unit 302 and a servo control unit 303. The memory unit 302 has executable instructions stored thereon, which, when executed, cause the processing unit 301 to execute the control strategy by way of the servo control unit 303. The servo control unit 303 is coupled to each articulable rotor 20 and the blades 22 and is thus disposed to control the articulations of each articulable rotor 20 and the collective and cyclic pitching of the blades 22 responsive to commands issued by the processing unit 301 in accordance with the control strategy.

Although not shown in FIGS. 1 and 2, the tail sitter aircraft 10 may further include an engine and a transmission system to drive rotations of each articulable rotor 20. The engine and the transmission system may be symmetric or asymmetric relative to a centerline of the tail sitter aircraft 10 and may include one or both of a gas turbine engine and an electric engine. The fuselage 11, the first and second wing elements 12 and 13 and the first and second prop-nacelles 14 and 15 may also be formed to define one or more interiors that can be manned or unmanned and that can be used to house fuel, aircraft electrical components and mission specific payloads.

During grounded operations, the tail sitter aircraft 10 is supported on alighting elements 40 (see FIG. 2), that can be disposed at trailing ends of the first and second prop-nacelles 14 and 15 or on spires 41 extending from the trailing ends of the first and second prop-nacelles 14 and 15 out of a plane of the first and second wing elements 12 and 13. In accordance with embodiments, the alighting elements 40 may be arranged in a 3-point or 4-point configuration. In any case, the nose cone section 110 points upwardly and the trailing section 111 points at the ground.

During VTOL and hover operations (hereinafter referred to generally as "hover operations"), the articulable rotors 20 of each of the first and second prop-nacelles 14 and 15 are driven by the engine and transmission to rotate about initial rotational axes that may be defined along longitudinal axes of the first and second prop-nacelles 14 and 15 and the blades 22 may be collectively and cyclically controlled to assume initial pitching angles. As the tail sitter aircraft 10 transitions to the forward flight operations, the articulable rotors 20 may be articulated to rotate about variable rotational axes that are not aligned with the longitudinal axes of the first and second prop-nacelles 14 and 15 while the blades 22 may be collectively and cyclically controlled to assume variable pitching angles.

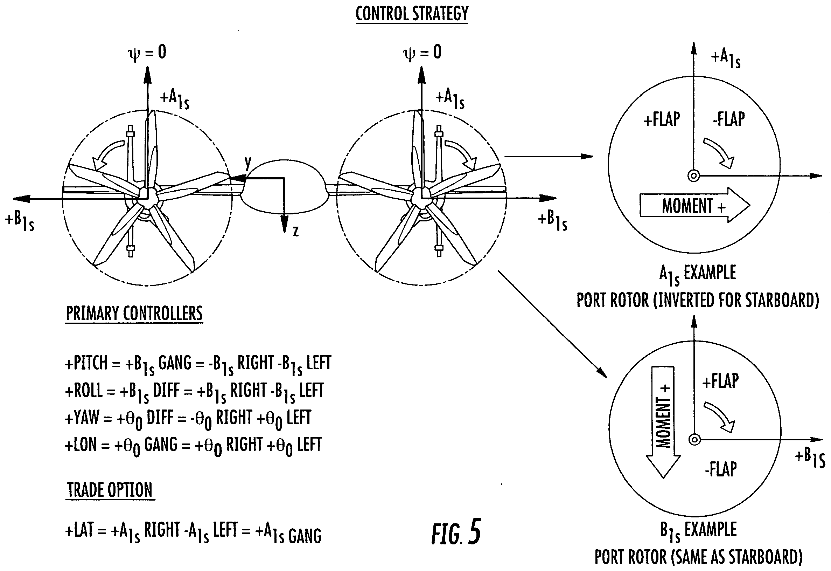

As shown in FIGS. 1 and 2 and with additional reference to FIG. 5, the control strategy executable by the flight computer 30 will now be described.

A positive pitching maneuver of the tail sitter aircraft 10 is achieved by issuance of a +B_{1s gang} command (i.e., a positive longitudinal cyclic command) from the flight computer 30 that results in an application of same-sign, negative aft cyclic commands to each articulable rotor 20. A negative pitching maneuver of the tail sitter aircraft 10 is achieved by issuance of a -B_{1s gang} command (i.e., a negative longitudinal cyclic command) from the flight computer 30 that results in an application of same-sign, positive aft cyclic commands to each articulable rotor 20. The positive/negative pitching maneuvers result in a nose up/down movement of the tail sitter aircraft 10 during flight operations in the forward flight regime and a toppling movement of the tail sitter aircraft 10 during flight operations in the hover regime.

A positive rolling maneuver of the tail sitter aircraft 10 is achieved by issuance of a +B_{1s diff} command (i.e., differential longitudinal cyclic commands) from the flight computer 30 that results in an application of a positive aft cyclic command to right-side articulable rotor 20 and a negative aft cyclic command to left-side articulable rotor 20. A negative rolling maneuver of the tail sitter aircraft 10 is achieved by issuance of a -B_{1s diff} command (i.e., differential longitudinal cyclic commands) from the flight computer 30 that results in an application of a negative aft cyclic command to right-side articulable rotor 20 and a positive aft cyclic command to left-side articulable rotor 20. The positive/negative rolling maneuvers result in a banking movement of the tail sitter aircraft 10 during flight operations in the forward flight regime and a spin-like-a-top movement of the tail sitter aircraft 10 during flight operations in the hover regime.

A positive yawing maneuver of the tail sitter aircraft 10 is achieved by issuance of a +θ_{0 diff} command (i.e., differential torque command or a torque command of varying magnitude directed to different rotors) from the flight computer 30 that results in an application of a negative collective command to right-side articulable rotor 20 and a positive collective command to left-side articulable rotor 20. A negative yawing maneuver of the tail sitter aircraft 10 is achieved by issuance of a -θ_{0 diff} command (i.e., differential torque command) from the flight computer 30 that results in an application of a positive collective command to right-side articulable rotor 20 and a negative collective command to left-side articulable rotor 20. The positive/negative yawing maneuvers result in differential torque conditions at each articulable rotor 20 and thus a yawing movement of the tail sitter aircraft 10 during flight operations in the forward flight regime and a teetering movement of the tail sitter aircraft 10 during flight operations in the hover regime.

Positive or negative thrusting or throttling maneuvers of the tail sitter aircraft 10 are respectively achieved by issuance of a ±θ_{0 gang} command (i.e., ganged torque command or a torque command of substantially uniform magnitude directed to different rotors) from the flight computer 30 that results in an application of same-sign, positive or negative collective commands to both the right-side articulable rotor 20 and the left-side articulable rotor 20. The positive/negative thrusting maneuvers result in increased or decreased torque conditions at each articulable rotor 20 and thus a speeding up or slowing down of the tail sitter aircraft 10 during flight operations in both the forward flight regime and the hover regime.

As shown in FIG. 2, side-slipping maneuvers of the tail sitter aircraft 10 are achieved by applications of same-sign articulation commands and same-sign cyclic commands to each articulable rotor 20. Such side-slipping maneuvers thus result in a sideways movement of the tail sitter aircraft 10 relative to wind, for example, during flight operations in both the forward flight and hover regimes. That is, where the tail sitter aircraft 10 is in a hover mode, and local wind conditions blow along the plate of the first and second wing elements 12 and 13 (in the right-to-left direction of FIG. 2), each articulable rotor 20 may be tilted toward the wind with lateral cyclic commands applied to each articulable rotor 20 to maintain a position and attitude of the tail sitter aircraft 10 relative to the ground.

While the disclosure is provided in detail in connection with only a limited number of embodiments, it should be readily understood that the disclosure is not limited to such disclosed embodiments. Rather, the disclosure can be modified to incorporate any number of variations or alterations which are commensurate with the scope of the disclosure, as defined by the appended claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A tail sitter aircraft (10) capable of forward flight and hover operations, comprising:
a wing (12, 13);
first and second prop-nacelles (14, 15) supportively disposed on the wing (12, 13),
each of the first and second prop-nacelles (14, 15) including an articulable rotor (20), which is rotatable about variable rotational axes and which comprises blades (22) that are collectively and cyclically controllable in both forward flight and hover regimes, wherein the articulable rotor (20) of each of the first and second prop-nacelles (14, 15) is rotatable about variable rotational axes that are not aligned with longitudinal axes of the first and second prop-nacelles (14, 15) while the blades (22) are collectively and cyclically controllable to assume variable pitching angles, and
a flight computer (30) configured to execute controlled articulations of each articulable rotor (20) and to execute collective and cyclic control of the blades (22).

2. The tail sitter aircraft according to claim 1, further comprising fuselage, wherein:
the wing comprises first and second wing elements (12, 13) extending outwardly from opposite sides of the fuselage (11), and
the first and second prop-nacelles (14, 15) are supportively disposed on the first and second wing elements (12, 13), respectively.

3. The tail sitter aircraft according to claim 1 or 2, wherein the blades (22) for each articulable rotor (20) are coupled to a hub (21) by way of a single, non-lead/lag pitch horn (23).

4. The tail sitter aircraft according to one of claims 1 to 3, wherein the flight computer (30) executes the controlled articulations of each articulable rotor (20) and the collective and cyclic control of the blades (22) during both of the forward flight and hover regimes.

5. The tail sitter aircraft according to one of claims 1 to 4, wherein:
rotation about a Y axis is achieved by application of same-sign cyclic commands to each articulable rotor (20),
rotation about an X axis is achieved by application of opposite-sign cyclic commands to each articulable rotor (20),
rotation about a Z axis is achieved by application of opposite-sign collective commands to each articulable rotor (20),
thrusting is achieved by application of same-sign collective commands to each articulable rotor (20), and
side-slipping is achieved by applications of same-sign articulation commands and same-sign cyclic commands to each articulable rotor (20).

6. The tail sitter aircraft according to claim 5, wherein the rotation about the Y axis results in a nose up/down movement during the forward flight regime and a toppling movement during the hover regime.

7. The tail sitter aircraft according to claim 5 or 6, wherein the rotation about the X axis results in a banking movement during the forward flight regime and a spin-like-a-top movement during the hover regime.

8. The tail sitter aircraft according to one of claims 5 to 7, wherein the rotation about the Z axis results in a yawing movement during the forward flight regime and a teetering movement during the hover regime.

9. The tail sitter aircraft according to one of claims 5 to 8, wherein the thrusting results in increased or decreased torque at each articulable rotor (20).

10. The tail sitter aircraft according to one of claims 5 to 9, wherein the side-slipping results in a sideways movement during the forward flight and hover regimes.

11. The tail sitter aircraft according to one of claims 1 to 10,
the flight computer (30) configured to execute a control strategy in both the forward flight and hover regimes by controlled articulations of each rotor (20) and by collective and cyclic control of the blades (22).

12. The tail sitter aircraft according to one of claims 1 to 11, further comprising fuselage (11), wherein:
the wing comprises first and second wing elements (12, 13) extending outwardly from opposite sides of the fuselage (11), and
the first and second prop-nacelles (14, 15) are supportively disposed on the first and second wing elements (12, 13), respectively.

13. The tail sitter aircraft according to one of claims 1 to 13, the flight computer (30) including a processing unit (301), a memory unit (302) and a servo control unit (303), the memory unit (302) having executable instructions stored thereon, which, when executed, cause the processing unit (301) to execute a control strategy by way of the servo control unit (303) which is coupled to each articulable rotor (20) and the blades (22) and is thus disposed to control the articulations of each articulable rotor (20) and the collective and cyclic pitching of the blades (22) responsive to commands issued by the processing unit (301) in accordance with the control strategy.

14. The tail sitter aircraft according to one of claims 11 to 13, wherein the control strategy comprises:
rotation about a Y axis achieved by application of same-sign cyclic commands to each articulable rotor (20), the pitching resulting in a nose up/down movement during the forward flight regime and a toppling movement during the hover regime,
rotation about an X axis achieved by application of opposite-sign cyclic commands to each articulable rotor (20), the rolling resulting in a banking movement during the forward flight regime and a spin-like-a-top movement during the hover regime,
rotation about a Z axis achieved by application of opposite-sign collective commands to each articulable rotor (20), the yawing resulting in a yawing movement during the forward flight regime and teetering movement during the hover regime,
thrusting achieved by application of same-sign collective commands to each articulable rotor (20), and
side-slipping achieved by applications of same-sign articulation commands and same-sign cyclic commands to each articulable rotor (20).

## Patentansprüche

1. Auf dem Heck stehendes Senkrechtstarter-Luftfahrzeug (10), das zu Vorwärtsflug- und Schwebevorgängen fähig ist, umfassend:
einen Flügel (12, 13);
eine erste und zweite Propellergondel (14, 15), die unterstützend an dem Flügel (12, 13) angeordnet sind,
wobei jede von der ersten und zweiten Propellergondel (14, 15) einen gelenkig lagerbaren Rotor (20) beinhaltet, der um variable Rotationsachsen drehbar ist und der Blätter (22) umfasst, die kollektiv und zyklisch in sowohl einem Vorwärtsflug- als auch Schweberegime steuerbar sind, wobei der gelenkig lagerbare Rotor (20) jeder der ersten und zweiten Propellergondel (14, 15) um variable Rotationsachsen drehbar ist, die nicht mit Längsachsen der ersten und zweiten Propellergondel (14, 15) fluchten, während die Blätter (22) kollektiv und zyklisch steuerbar sind, um variable Anstellwinkel einzunehmen, und
einen Flugcomputer (30), der dazu konfiguriert ist, gesteuerte Gelenkbewegungen jedes gelenkig lagerbaren Rotors (20) auszuführen und die kollektive und zyklische Steuerung der Blätter (22) auszuführen.

2. Auf dem Heck stehendes Senkrechtstarter-Luftfahrzeug nach Anspruch 1, ferner umfassend einen Rumpf, wobei:
der Flügel ein erstes und zweites Flügelelement (12, 13) umfasst, die sich von gegenüberliegenden Seiten des Rumpfs (11) nach außen erstrecken, und
die erste und zweite Propellergondel (14, 15) unterstützend an dem ersten bzw. zweiten Flügelelement (12, 13) angeordnet sind.

3. Auf dem Heck stehendes Senkrechtstarter-Luftfahrzeug nach Anspruch 1 oder 2, wobei die Blätter (22) für jeden gelenkig lagerbaren Rotor (20) mittels eines einzelnen, Nichtvorlauf-/Nachlauf-Anstellhorn (23) an eine Nabe (21) gekoppelt sind.

4. Auf dem Heck stehendes Senkrechtstarter-Luftfahrzeug nach einem der Ansprüche 1 bis 3, wobei der Flugcomputer (30) die gesteuerten Gelenkbewegungen jedes gelenkig lagerbaren Rotors (20) und die kollektive und zyklische Steuerung der Blätter (22) während sowohl des Vorwärtsflug- als auch des Schweberegimes ausführt.

5. Auf dem Heck stehendes Senkrechtstarter-Luftfahrzeug nach einem der Ansprüche 1 bis 4, wobei:
Rotation um eine Y-Achse durch Anwendung zyklischer Befehle mit gleichem Vorzeichen an jedem gelenkig lagerbaren Rotor (20) erzielt wird,
Rotation um eine X-Achse durch Anwendung zyklischer Befehle mit umgekehrtem Vorzeichen an jedem gelenkig lagerbaren Rotor (20) erzielt wird,
Rotation um eine Z-Achse durch Anwendung kollektiver Befehle mit umgekehrtem Vorzeichen an jedem gelenkig lagerbaren Rotor (20) erzielt wird,
Vorschub durch Anwendung kollektiver Befehle mit gleichem Vorzeichen an jedem gelenkigen Rotor (20) erzielt wird, und
Seitengleiten durch Anwendungen von Gelenkbewegungsbefehlen mit gleichem Vorzeichen und zyklischen Befehlen mit gleichem Vorzeichen an jedem gelenkig lagerbaren Rotor (20) erzielt wird.

6. Auf dem Heck stehendes Senkrechtstarter-Luftfahrzeug nach Anspruch 5, wobei die Rotation um die Y-Achse zu einer Auf- und Abbewegung der Nase während des Vorwärtsflugregimes und einer Kippbewegung während des Schweberegimes führt.

7. Auf dem Heck stehendes Senkrechtstarter-Luftfahrzeug nach Anspruch 5 oder 6, wobei die Rotation um die X-Achse zu einer Rollbewegung während des Vorwärtsflugregimes und einer Kreiseldrehbewegung während des Schweberegimes führt.

8. Auf dem Heck stehendes Senkrechtstarter-Luftfahrzeug nach einem der Ansprüche 5 bis 7, wobei die Rotation um die Z-Achse zu einer Gierbewegung während des Vorwärtsflugregimes und einer Taumelbewegung während des Schweberegimes führt.

9. Auf dem Heck stehendes Senkrechtstarter-Luftfahrzeug nach einem der Ansprüche 5 bis 8, wobei der Vorschub zu einem erhöhten oder verringerten Drehmoment an jedem gelenkig lagerbaren Rotor (20) führt.

10. Auf dem Heck stehendes Senkrechtstarter-Luftfahrzeug nach einem der Ansprüche 5 bis 9, wobei das Seitengleiten zu einer seitlichen Bewegung während des Vorwärtsflug- und Schweberegimes führt.

11. Auf dem Heck stehendes Senkrechtstarter-Luftfahrzeug nach einem der Ansprüche 1 bis 10,
wobei der Flugcomputer (30) dazu konfiguriert ist, eine Steuerungsstrategie in sowohl dem Vorwärtsflug- als auch dem Schweberegime durch gesteuerte Gelenkbewegungen jedes Rotors (20) und durch kollektive und zyklische Steuerung der Blätter (22) auszuführen.

12. Auf dem Heck stehendes Senkrechtstarter-Luftfahrzeug nach einem der Ansprüche 1 bis 11, ferner umfassend einen Rumpf (11), wobei:
der Flügel ein erstes und zweites Flügelelement (12, 13) umfasst, die sich von gegenüberliegenden Seiten des Rumpfs (11) nach außen erstrecken, und
die erste und zweite Propellergondel (14, 15) unterstützend an dem ersten bzw. zweiten Flügelelement (12, 13) angeordnet sind.

13. Auf dem Heck stehendes Senkrechtstarter-Luftfahrzeug nach einem der Ansprüche 1 bis 13, wobei der Flugcomputer (30) eine Verarbeitungseinheit (301), eine Speichereinheit (302) und eine Servosteuereinheit (303) beinhaltet, wobei die Speichereinheit (302) darin gespeicherte ausführbare Anweisungen aufweist, die bei Ausführung die Verarbeitungseinheit (301) veranlassen, eine Steuerungsstrategie mittels der Servosteuereinheit (303) auszuführen, die an jeden gelenkig lagerbaren Rotor (20) und die Blätter (22) gekoppelt ist und somit angeordnet ist, um die Gelenkbewegungen jedes gelenkig lagerbaren Rotors (20) und das kollektive und zyklische Anstellen der Blätter (22) als Reaktion auf Befehle, die durch die Verarbeitungseinheit (301) gemäß der Steuerungsstrategie ausgegeben werden, zu steuern.

14. Auf dem Heck stehendes Senkrechtstarter-Luftfahrzeug nach einem der Ansprüche 11 bis 13, wobei die Steuerungsstrategie Folgendes umfasst:
Rotation um eine Y-Achse, erzielt durch Anwendung zyklischer Befehle mit gleichem Vorzeichen an jedem gelenkig lagerbaren Rotor (20), wobei das Anstellen zu einer Auf- und Abbewegung der Nase während des Vorwärtsflugregimes und einer Kippbewegung während des Schweberegimes führt,
Rotation um eine X-Achse, erzielt durch Anwendung zyklischer Befehle mit umgekehrtem Vorzeichen an jedem gelenkig lagerbaren Rotor (20), wobei das Rollen zu einer Rollbewegung während des Vorwärtsflugregimes und einer Kreiseldrehbewegung während des Schweberegimes führt,
Rotation um eine Z-Achse, erzielt durch Anwendung kollektiver Befehle mit umgekehrtem Vorzeichen an jedem gelenkig lagerbaren Rotor (20), wobei das Gieren zu einer Gierbewegung während des Vorwärtsflugregimes und einer Taumelbewegung während des Schweberegimes führt,
Vorschub, erzielt durch Anwendung kollektiver Befehle mit gleichem Vorzeichen an jedem gelenkig lagerbaren Rotor (20), und
Seitengleiten, erzielt durch Anwendungen von Gelenkbewegungsbefehlen mit gleichem Vorzeichen und zyklischen Befehlen mit gleichem Vorzeichen an jedem gelenkig lagerbaren Rotor (20).

## Revendications

1. Aéronef de type « tail-sitter » (10) capable de vol vers l'avant et de vol stationnaire, comprenant
une aile (12, 13) ;
des première et seconde nacelles de propulsion (14, 15) disposées de manière supportée sur l'aile (12, 13),
chacune des première et seconde nacelles de propulsion (14, 15) incluant un rotor articulable (20), qui peut tourner autour d'axes de rotation variables et qui comprend des pales (22) qui peuvent être collectivement et cycliquement commandées à la fois durant un vol vers l'avant et un vol stationnaire, dans lequel le rotor articulable (20) de chacune des première et seconde nacelles de propulsion (14, 15) peut tourner autour d'axes de rotation variables qui ne sont pas alignés avec les axes longitudinaux des première et seconde nacelles de propulsion (14, 15) tandis que les pales (22) peuvent être commandées collectivement et cycliquement pour prendre différents angles d'inclinaison, et
un ordinateur de vol (30) configuré pour exécuter des articulations commandées de chaque rotor articulable (20) et pour exécuter la commande collective et cyclique des pales (22) .

2. Aéronef de type « tail-sitter » selon la revendication 1, comprenant en outre un fuselage, dans lequel :
l'aile comprend des premier et second éléments d'aile (12, 13) s'étendant vers l'extérieur depuis des côtés opposés du fuselage (11), et
les première et seconde nacelles de propulsion (14, 15) sont disposées de manière supportée sur les premier et second éléments d'aile (12, 13), respectivement.

3. Aéronef de type « tail-sitter » selon la revendication 1 ou 2, dans lequel les pales (22) de chaque rotor articulable (20) sont couplées à un moyeu (21) au moyen d'un unique levier de pas non-avance/retard (23).

4. Aéronef de type « tail-sitter » selon l'une des revendications 1 à 3, dans lequel l'ordinateur de vol (30) exécute les articulations commandées de chaque rotor articulable (20) et la commande collective et cyclique des pales (22) durant à la fois le vol vers l'avant et le vol stationnaire.

5. Aéronef de type « tail-sitter » selon l'une des revendications 1 à 4, dans lequel :
la rotation autour d'un axe Y est obtenue par l'application de commandes cycliques de même signe à chaque rotor articulable (20),
la rotation autour d'un axe X est obtenue par l'application de commandes cycliques de signe opposé à chaque rotor articulable (20),
la rotation autour d'un axe Z est obtenue par l'application de commandes collectives de signe opposé à chaque rotor articulable (20),
la poussée est obtenue par l'application de commandes collectives de même signe à chaque rotor articulé (20), et
le glissement latéral est obtenu par l'application de commandes d'articulations de même signe et de commandes cycliques de même signe à chaque rotor articulable (20).

6. Aéronef de type « tail-sitter » selon la revendication 5, dans lequel la rotation autour de l'axe Y entraîne un mouvement ascendant/descendant du nez durant le vol vers l'avant et un mouvement de basculement durant le vol stationnaire.

7. Aéronef de type « tail-sitter » selon la revendication 5 ou 6, dans lequel la rotation autour de l'axe X entraîne un mouvement d'inclinaison durant le vol vers l'avant et un mouvement de toupie durant le vol stationnaire.

8. Aéronef de type « tail-sitter » selon l'une des revendications 5 à 7, dans lequel la rotation autour de l'axe Z entraîne un mouvement de lacet durant le vol vers l'avant et un mouvement de bascule durant le vol stationnaire.

9. Aéronef de type « tail-sitter » selon l'une des revendications 5 à 8, dans lequel la poussée entraîne une augmentation ou une diminution du couple au niveau de chaque rotor articulable (20).

10. Aéronef de type « tail-sitter » selon l'une des revendications 5 à 9, dans lequel le glissement latéral entraîne un mouvement latéral durant le vol vers l'avant et le vol stationnaire.

11. Aéronef de type « tail-sitter » selon l'une des revendications 1 à 10,
l'ordinateur de vol (30) étant configuré pour exécuter une stratégie de commande à la fois durant le vol vers l'avant et durant le vol stationnaire par des articulations commandées de chaque rotor (20) et par la commande collective et cyclique des pales (22).

12. Aéronef de type « tail-sitter » selon l'une des revendications 1 à 11, comprenant en outre un fuselage (11), dans lequel :
l'aile comprend des premier et second éléments d'aile (12, 13) s'étendant vers l'extérieur depuis des côtés opposés du fuselage (11), et
les première et seconde nacelles de propulsion (14, 15) sont disposées de manière supportée sur les premier et second éléments d'aile (12, 13), respectivement.

13. Aéronef de type « tail-sitter » selon l'une des revendications 1 à 13, l'ordinateur de vol (30) incluant une unité de traitement (301), une unité de mémoire (302) et une unité de servocommande (303), l'unité de mémoire (302) ayant, stockées en elle, des instructions exécutables, qui, lorsqu'elles sont exécutées, conduisent l'unité de traitement (301) à exécuter une stratégie de commande au moyen de l'unité de servocommande (303) qui est couplée à chaque rotor articulable (20) et aux pales (22) et est ainsi disposée de manière à commander les articulations de chaque rotor articulable (20) et l'inclinaison collective et cyclique des pales (22) en réponse aux commandes délivrées par l'unité de traitement (301) conformément à la stratégie de commande.

14. Aéronef de type « tail-sitter » selon l'une des revendications 11 à 13, dans lequel la stratégie de commande comprend :
une rotation autour d'un axe Y obtenue par l'application de commandes cycliques de même signe à chaque rotor articulable (20), le tangage entraînant un mouvement ascendant/descendant du nez durant le vol vers l'avant et un mouvement de basculement durant le vol stationnaire,
une rotation autour d'un axe X obtenue par l'application de commandes cycliques de signe opposé à chaque rotor articulable (20), le roulis entraînant un mouvement d'inclinaison durant le vol vers l'avant et un mouvement de toupie durant le vol stationnaire,
une rotation autour d'un axe Z obtenue par l'application de commandes collectives de signe opposé à chaque rotor articulable (20), le lacet entraînant un mouvement de lacet durant le vol vers l'avant et un mouvement de bascule durant le vol stationnaire,
une poussée obtenue par l'application de commandes collectives de même signe à chaque rotor articulable (20), et
un glissement latéral obtenu par l'application de commandes d'articulations de même signe et de commandes cycliques de même signe à chaque rotor articulable (20).
